Europäisches Patentamt

European Patent Office

Office européen des brevets

(11) Numéro de publication : **0 494 822 A1**

## (12) DEMANDE DE BREVET EUROPEEN

(21) Numéro de dépôt : **92400044.1**

(22) Date de dépôt : **08.01.92**

(51) Int. Cl.⁵ : **A01G 27/00**

(30) Priorité : **08.01.91 FR 9100152**

(43) Date de publication de la demande :
**15.07.92 Bulletin 92/29**

(84) Etats contractants désignés :
**DE ES GB IT NL**

(72) Inventeur : **Faure, Daniel**
**8 Impasse Saint Symphorien**
**F-79000 Niort (FR)**

(74) Mandataire : **Moncheny, Michel et al**
**c/o Cabinet Lavoix 2 Place d'Estienne d'Orves**
**F-75441 Paris Cedex 09 (FR)**

(71) Demandeur : **Faure, Daniel**
**8 Impasse Saint Symphorien**
**F-79000 Niort (FR)**

(54) **Bac jardinière à réserve d'eau pour usage urbain.**

(57) Un tel bac est caractérisé par un bac jardinière pour usage urbain du type constitué par un récipient monobloc (1) comportant un élément intermédiaire perméable, de retenue de la terre végétale (4), déterminant un compartiment superieur (5) pour recevoir celle-ci et un compartiment inférieur (6) destiné à être rempli d'eau (7) pour constituer une réserve.

Selon l'invention le bac comporte à sa partie inférieure externe deux rainures (8) longitudinales et parallèles débouchant sur deux faces opposées dudit bac pour constituer des moyens de préhension inférieurs par palettisation et délimitant des pieds d'appui creux (11) correspondant sensiblement au compartiment inférieur (6) à réserve d'eau (7) d'une part et constituant des renforts aptes à rigidifier la structure du bac d'autre part.

Fig. 6

La présente invention concerne un bac jardinière du type constitué par un récipient monobloc, comportant un élément intermédiaire perméable de retenue de la terre végétale, déterminant un compartiment supérieur pour recevoir celle-ci et un compartiment inférieur destiné à être rempli d'eau pour constituer une réserve.

Ce type de bac connu présente un inconvénient majeur, notamment lorsqu'ils sont destinés à un usage à l'extérieur (places, zones piétonnières, jardins publics, etc.) qui réside dans les dimensions à leur donner pour être en concordance avec l'environnement dans lequel ils sont disposés et qui se traduit bien entendu par un poids excessif. En effet, au poids de la terre, dont le volume est proportionnel à celui du bac, s'ajoute le poids de l'eau constituant une réserve, de volume proportionnel quant à lui au volume de terre à irriguer.

Se pose alors le problème de transport ou de déplacement de tels bacs une fois en place.

En effet si, lors de leur installation, on comprend aisément qu'ils puissent être amenés vides, donc d'un poids relativement faible et remplis ensuite de terre et d'eau sur place, en revanche leur déplacement ultérieur, lorsqu'ils sont en service, présente une difficulté de transport liée au poids de l'ensemble.

La présente invention a pour but de remédier à cet inconvénient en rendant possible la préhension de tels bacs par tous moyens de levage comme par exemple par chariot élévateur à fourches, ou grue par l'intermédiaire d'élingues, sans aucune intervention manuelle, si ce n'est la mise en place des accessoires de levage.

Bien entendu l'on aurait pu songer à rapporter des pieds sous un tel bac pour permettre le passage d'élingues ou des fourches, ou bien aussi mettre le bac sur cales, mais ces moyens sont inesthétiques et surtout occasionnent une surélévation de la hauteur de l'ensemble due à la hauteur des pieds ou cales s'ajoutant à celle de la réserve d'eau et à celle de la terre.

Un autre inconvénient est fréquemment rencontré dans l'utilisation à l'extérieur de ces bacs à réserve d'eau et qui concerne précisément l'évaporation rapide de celle-ci, en cas d'exposition au soleil, notamment dans les régions chaudes.

La présente invention a également pour but de remédier à cet inconvénient et concerne à cet effet un bac jardinière pour usage urbain du type constitué par un récipient monobloc comportant un élément intermédiaire perméable, de retenue de la terre végétale, déterminant un compartiment supérieur pour recevoir celle-ci et un compartiment inférieur destiné à être rempli d'eau naturellement par des pluies ou artificiellement par des arrosages ou remplissages pour constituer une réserve, caractérisé en ce qu'il comporte à sa partie inférieure externe deux rainures longitudinales et parallèles débouchant sur deux faces opposées dudit bac pour constituer des moyens de préhension inférieurs par palettisation et délimitant des pieds d'appui creux correspondant sensiblement au compartiment inférieur à réserve d'eau d'une part et constituant des renforts aptes à rigidifier la structure du bac d'autre part.

Ainsi le bac ne subit pas de surélévation, ses pieds creux faisant office de réserve d'eau. De plus, ces derniers peuvent avantageusement être obtenus par moulage de matière plastique et de béton, avec le récipient proprement dit, ils contribuent donc non seulement à la rigidité et à la stabilité de l'ensemble, mais également à son aspect esthétique.

La présente invention concerne également les caractéristiques ci-après, considérées isolément ou selon toutes leurs combinaisons techniques possibles.

Selon une autre caractéristique de l'invention les pieds creux à réserve d'eau sont en communication avec l'extérieur par des orifices dont au moins deux d'entre eux constituent des trop-pleins situés, par rapport au sol, à des hauteurs différentes, et obturables en fonction du niveau d'eau souhaité selon la saison, le trop-plein situé au niveau le plus haut n'étant jamais obturé.

En effet, ce dernier constitue dans une première variante le niveau maximum de réserve d'eau, au-delà duquel la terre serait exagérément imprégnée d'eau, ce qui provoquerait le pourrissement des racines des plantes.

Selon une seconde variante de réalisation, le trop-plein situé le plus haut se situe dans la région proche du sommet du bac de sorte à permettre son utilisation pour des plantes aquatiques.

De plus, cela évite un remplissage accidentel du bac, au-delà de sa capacité globale.

Selon une autre caractéristique de l'invention des orifices sont situés à la partie la plus basse de chaque pied creux à réserve d'eau pour constituer, par l'intermédiaire de bouchons amovibles respectifs, des organes de vidange complète du bac.

Avantageusement, les orifices de vidange de plusieurs bacs selon l'invention peuvent être raccordés deux à deux de sorte à autoriser un remplissage simultané des bacs selon le principe des vases communicants, les bacs raccordés étant de préférence disposés sur un sol sensiblement horizontal. De tels raccordements permettent avantageusement d'automatiser aisément le remplissage de plusieurs bacs voisins. Selon une autre caractéristique de l'invention ses parois latérales ainsi que les côtés longitudinaux des rainures sont réalisés suivant des plans obliques, de manière à constituer des dépouilles aptes à permettre le gerbage de plusieurs bacs vides, de section quadrangulaire, par empilage vertical.

Selon une autre caractéristique de l'invention le bac comporte à sa partie supérieure un rebord périphérique externe sans lequel est fixée par serrage une cornière quadrangulaire de contour correspondant et de section en L apte à renforcer sa solidité.

Selon une autre caractéristique de l'invention la cornière comporte quatre anneaux fixes rapportés par soudure à l'extérieur de ses angles, selon une bissectrice (YY') de ceux-ci, pour permettre le passage d'élingues de levage d'une grue.

Selon une autre caractéristique de l'invention les parois latérales du bac reçoivent un habillage constitué de plaques de parement et d'isolation disposées à distance desdites parois, par l'intermédiaire de moyens de fixation supérieure et inférieure et d'appui central et inférieur de manière à ménager entre lesdites parois du bac et les plaques, un vide d'air formant isolant et diminuant les besoins en eau de la terre contenue dans le bac.

L'invention sera encore illustrée sans être aucunement limitée, par la description qui va suivre, fait en regard des dessins annexés sur lesquels :

La figure 1 est une vue en perspective d'un bac jardinière selon l'invention, vidé de ses éléments et ingrédients internes.

La figure 2 est une vue de dessus, d'un bac selon la figure 1 auquel on a ôté les plaques de parement latérales.

La figure 3 est une vue de côté d'un bac selon la figure 2.

La figure 4 est une vue d'un côté du bac, perpendiculaire à celui montré à la figure 3.

La figure 5 est une vue en coupe d'un bac selon la ligne VV de la figure 2.

La figure 6 est une vue en coupe d'un bac selon la figure 5, rempli de terre et d'eau, en saison d'été.

La figure 7 est une vue en coupe d'un bac selon la figure 5, rempli de terre et d'eau en saison d'hiver.

La figure 8 est une vue en coupe d'un bac selon la figure 5, rempli de terre et d'eau, en saison d'été, suivant un autre mode de réalisation.

La figure 9 est une vue partiellement en coupe, montrant une des plaques latérales de parement et d'isolation rapportées sur le bac par des moyens de fixation et d'appui.

La figure 10 montre à l'échelle agrandie des moyens de fixation supérieurs de la plaque selon le détail A de la figure 9.

La figure 11 montre à échelle agrandie des moyens de préhension supérieurs du bac selon le détail B de la figure 9.

La figure 12 montre à échelle agrandie des moyens d'appui intermédiaires de la plaque sur le bac selon le détail C de la figure 9.

La figure 13 montre à échelle agrandie des moyens de fixation d'une jupe inférieure de la plaque selon le détail D de la figure 9.

La figure 14 montre à échelle agrandie des moyens inférieurs de fixation de deux plaques entre elles, et d'appui sur la partie inférieure du bac, selon le détail D de la figure 9.

La figure 15 est une vue en perspective selon la figure 11.

La figure 16 est une vue de dessus selon la figure 15.

La figure 17 est une vue en plan d'un moyen de fixation et d'appui inférieur de la plaque sur le bac.

La figure 18 est une vue en coupe selon la ligne XVII-XVII de la figure 17.

La figure 19 est une vue en plan de la jupe selon la figure 13.

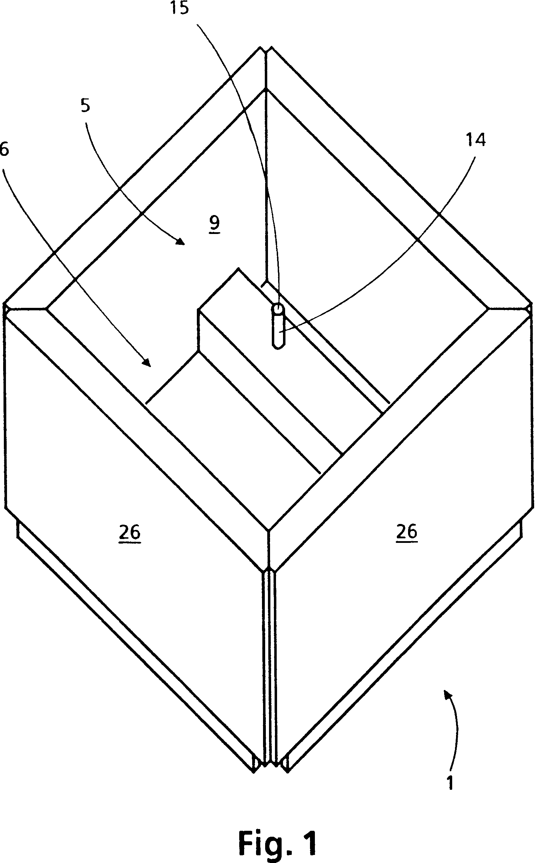

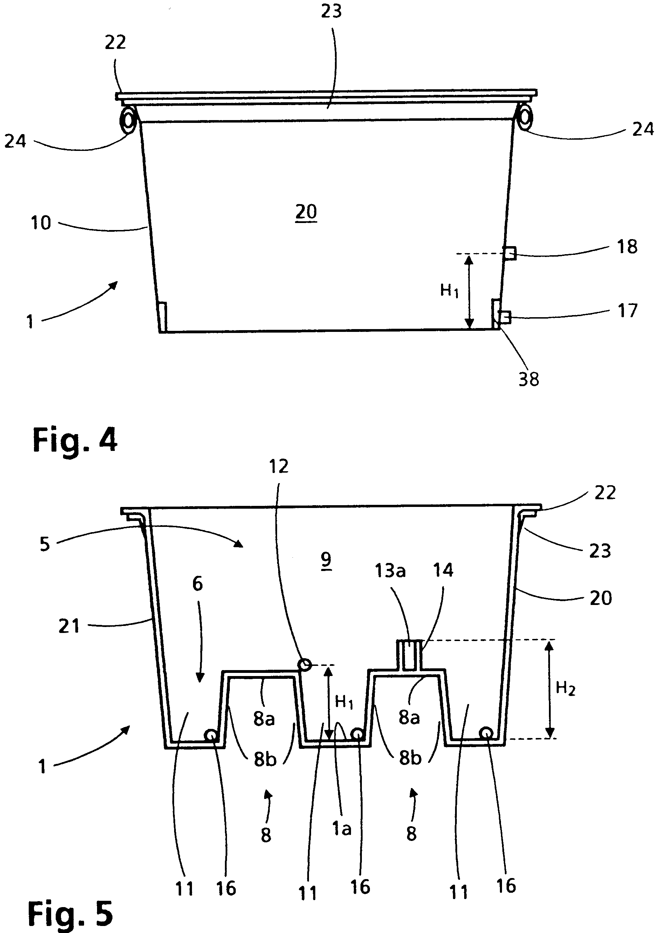

Le bac représenté sur les figures 1 à 8 est constitué par un récipient monobloc 1 obtenu par moulage, soit de matière plastique, soit de béton armé.

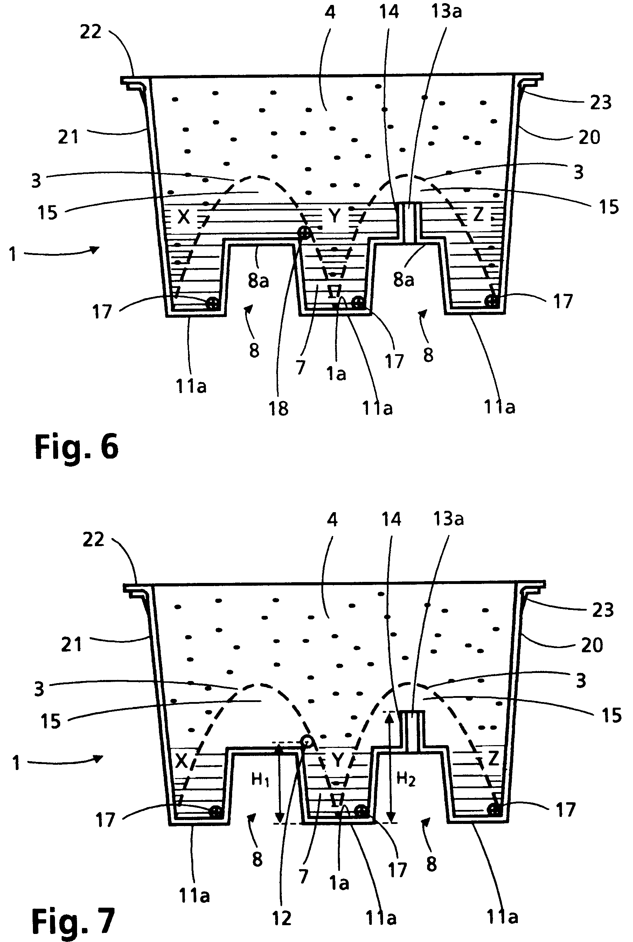

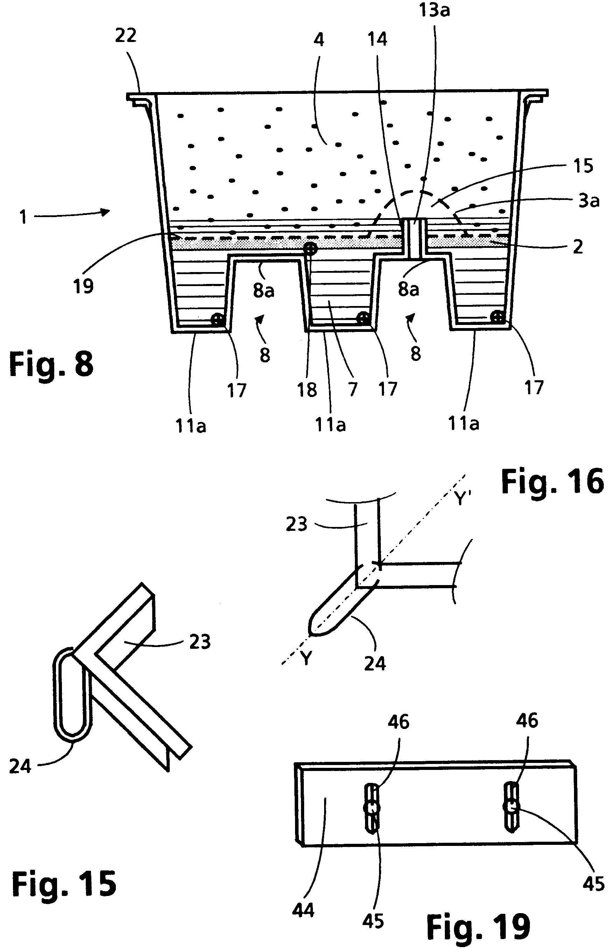

Il comporte un élément intermédiaire perméable 2 (fig. 8) ou 3 (fig 6, 7), assurant la retenue de la terre végétale 4.

Ledit élément délimite un compartiment supérieur 5 pour recevoir celle-ci et un compartiment inférieur 6 destiné à être rempli d'eau 7 pour constituer une réserve.

Le récipient 1 comporte au niveau de son compartiment inférieur 6 deux rainures 8 longitudinales et parallèles entre elles et par rapport aux côtés du récipient 1, ce dernier étant en l'occurrence quadrangulaire.

Les rainures 8 débouchent sur deux faces opposées 9, 10 de l'élément 1 formant bac pour constituer des moyens de préhension inférieurs par palletisation, à l'aide d'un chariot élévateur à fourches, connu en soi.

Les rainures 8 délimitent des pieds d'appui creux 11, en l'occurrence au nombre de trois de formes également longitudinales, de section sensiblement en U dont la branche horizontale 11a est en appui sur le sol, ceci à l'inverse des rainures 8, également en forme de U dont la branche horizontale 8a est à distance du sol pour former deux logements aptes à permettre le passage des fourches du chariot élévateur.

Le volume constitué par les pieds d'appui creux 11 correspond sensiblement au compartiment inférieur 6 précité pour constituer la réserve d'eau 7 d'une part et rigidifier la structure du bac d'autre part.

Comme visible sur les figures 1 à 8 les pieds creux 11 à réserve d'eau sont en communication avec l'extérieur par des orifices, dont au moins deux d'entre eux 12, 13A constituent des trop-pleins situés, par rapport au sol, à des hauteurs H1, H2 différentes, et pouvant être obturés en fonction du niveau d'eau souhaité selon la saison.

Selon l'exemple de réalisation représenté sur les figures, le trop-plein 12 disposé à une hauteur H1 correspond à un niveau d'eau suffisant en hiver. Il est disposé selon un axe sensiblement horizontal sur la paroi latérale 9 du récipient 1.

Ce trop-plein 12, lorsqu'il n'est pas obturé (fig. 7) permet l'écoulement de l'eau à l'extérieur du récipient, lorsqu'elle arrive à son niveau. Ce niveau correspond au moins à celui des sommets 8a internes des rainures 8, de manière à assurer un niveau d'eau identique dans chaque pied creux 11, par l'intermédiaire d'un seul trop-plein 12, ce qui ne serait pas le cas si ce dernier était situé sous le niveau 8a.

En effet, il faudrait alors autant de trop-pleins 12 qu'il y a de pieds 11, ceux-ci ne communiquant pas entre eux.

Ainsi, entre ce niveau minimum (hiver) et un niveau maximum (été) il est possible de prévoir des trop-pleins intermédiaires, mais dans tous les cas de figures envisageables, il faut retenir que le trop-plein 13A situé au niveau le plus haut ne devra jamais être obturé. Il correspond en effet au niveau maximum au-delà duquel un remplissage ne doit pas être rendu possible.

Dans l'exemple représenté, le trop-plein 13A évite une imprégnation exagérée de la terre. Mais, selon une variante pour plantes aquatiques non représentée, on peut prévoir un orifice supplémentaire sous le rebord périphérique 32 du bac qui constitue alors le trop-plein le plus haut ne devant pas être obturé.

Par ailleurs, des orifices obturables 16 sont situés à la partie la plus basse de chaque pied creux 11 à réserve d'eau pour constituer par l'intermédiaire de bouchons amovibles 17 des organes de vidange du bac. De la même manière, un bouchon 18 constitue un organe d'obturation du trop-plein 12 précité.

Les figure 6 et 7 montrent respectivement le trop-plein 12 obturé ou non par le bouchon 18, correspondant à une position été ou hiver du niveau d'eau 7.

Le trop-plein supérieur 13A pourrait être également constitué par un orifice latéral tel que celui du trop-plein 12, mais dans le présent cas de figure, il a été choisi de réaliser le trop-plein supérieur 13A par l'intermédiaire d'un conduit vertical tubulaire 14 d'une hauteur H2 prédéterminée, débouchant d'une part à l'extérieur en traversant au moins un des sommets 8a d'une rainure 8 et d'autre part à l'intérieur, dans un volume d'air 15 ménagé entre la terre 4 et l'eau 7.

Le volume d'air 15 dans lequel débouche le conduit 14, constituant le trop-plein supérieur 13A, est créé par un tunnel perforé constituant en fait lui-même l'élément de retenue 3 de la terre 4, comme évoqué ci-dessus.

Un tel tunnel 3 est interposé entre la terre 4 en question et le fond 1A du bac sur lequel il prend appui (fig. 6 et 7).

Selon un autre exemple de réalisation (fig. 8) un tunnel 3A est interposé entre la terre 4 et un élément de retenue 2 de la terre 4 pour délimiter le volume d'air 15 précité. Dans ce cas de figure, l'élément 2 est une grille quadrangulaire connue en soi, placée horizontalement sur les sommets 8a des rainures 8 et recouverte d'une nappe 19 conçue dans un matériau imputrescible à fort pouvoir absorbant.

Selon un mode préféré de réalisation, deux trop-pleins 13A, 13B sont disposés symétriquement sur le sommet 8a de chaque rainure 8.

De ce fait et selon l'exemple montré sur les figures 6 et 7, deux tunnels perforés 3, en appui sur le fond 1A du bac, sont d'une hauteur H2 au moins supérieure à celle du plan horizontal de l'extrémité interne des conduits 14, constituant les trop-pleins supérieurs 13A, 13B et sont juxtaposés pour enjamber respectivement chaque rainure 8 et définir entre eux-mêmes et entre eux et les parois latérales internes respectives 20, 21 du bac des zones de terre X, Y, Z situées sous le niveau de l'eau 7, de manière telle que celle-ci 7 remonte dans la masse d'air 4, par capillarité, pour l'irriguer.

Selon, une caractéristique de l'invention, les parois latérales 9, 10, 20, 21 du récipient 1, ainsi que les côtés longitudinaux 8b des rainures 8 sont réalisés suivant des plans obliques, de manière à constituer des dépouilles aptes à permettre le gerbage de plusieurs bacs vides par empilage vertical, pour diminuer leur encombrement en stockage.

Par ailleurs, le récipient 1 comporte à sa partie supérieure un rebord périphérique externe 22 sous lequel est fixée par serrage une cornière quadrangulaire 23 de contour correspondant audit rebord 22 et de section en L apte à renforcer sa solidité.

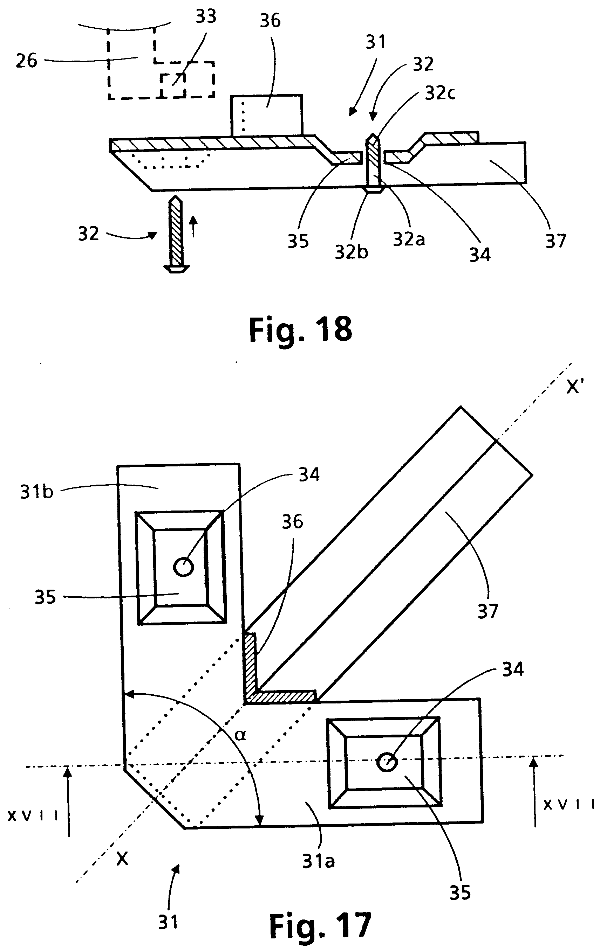

De plus, la cornière 23 comporte avantageusement quatre anneaux fixes 24 rapportés par soudure à l'extérieur de ses angles, selon une bissectrice YY' de ceux-ci (figure 16), pour permettre le passage d'une élingue de levage d'une grue.

Cette disposition trouve son utilité pour pouvoir lever le bac verticalement dans des cas particuliers où un chariot élévateur ne pourrait intervenir, mais aussi pour procéder à la vidange complète du bac. Dans ce dernier cas, l'élingue est passée uniquement dans deux anneaux 24 situés du même côté du bac.

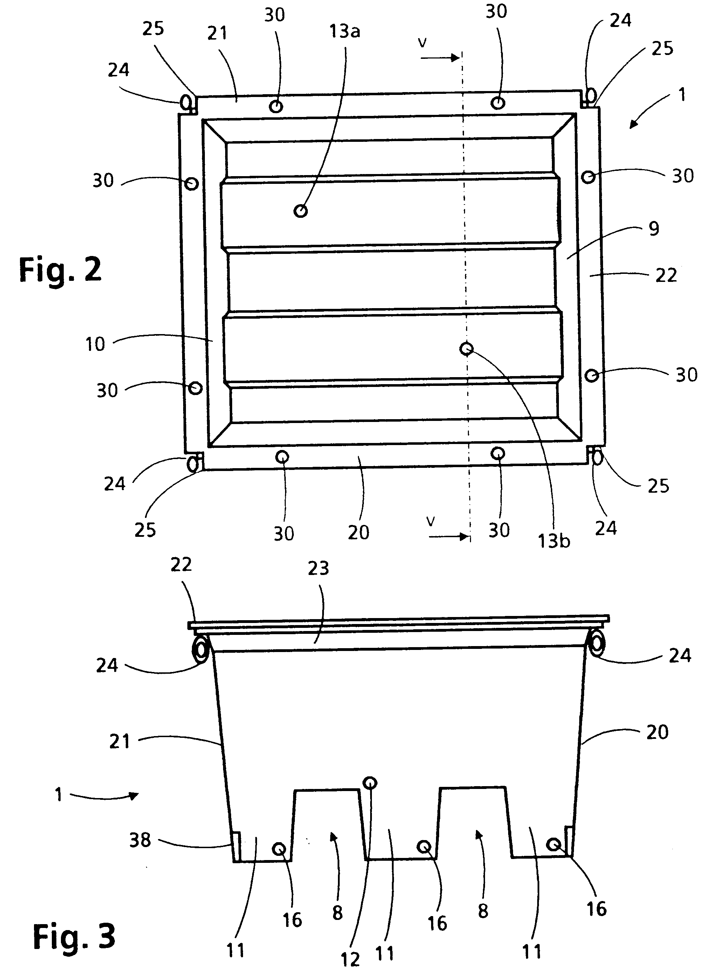

Comme le montre la figure 2 les angles du rebord supérieur 22 comportent des encoches de dégagement 25 pour laisser libres les anneaux de levage 24.

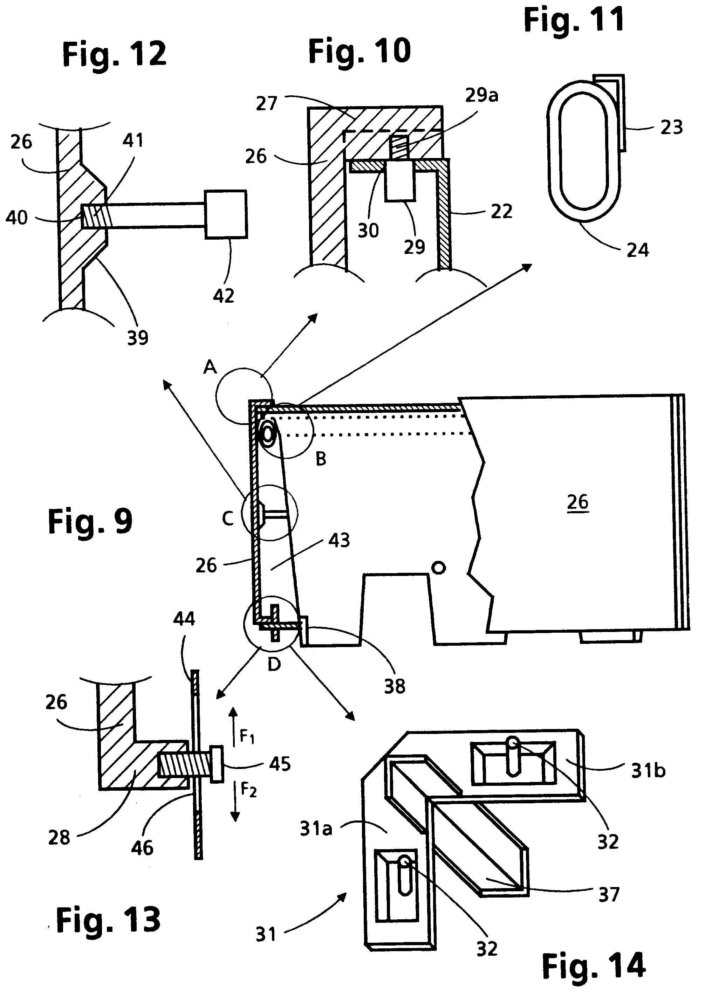

Lorsque le bac est en place définitivement, ses parois latérales 9, 10, 20, 21 reçoivent un habillage constitué de plaques de parement et d'isolation 26 disposées à distance desdites parois, par l'intermédiaire de moyens de fixation et d'appui. Ceux-ci sont disposés sur des rebords supérieurs 27 (figure 10) et inférieurs 28 (figure 13) parallèles, ménagés sur les champs desdites plaques 26, perpendiculairement à leur plan vertical et dirigés vers le récipient 1 à habiller.

Des moyens de fixation supérieurs des plaques 26 sur le récipient 1 sont constitués par deux ergots cylindriques 29 équidistants, disposés perpendiculairement, et dirigés vers le bas, sur la face interne du rebord supérieur 27 de la plaque 26 considérée et aptes à se loger dans deux logements correspondants 30 ménagés dans le rebord périphérique externe 22 du récipient 1, au cours d'un mouvement d'accrochage de haut en bas. Dans le présent exemple, les ergots 29 comportent une partie filetée 29a se vissant dans des inserts correspondants du rebord 27 de la plaque 26.

Les moyens de fixation inférieurs des plaques 26 sont constitués par une pièce rapportée 31 (figures 14, 17) formant une équerre et reliant deux à deux les plaques 26, par leur rebord inférieur 28 respectifs, par l'intermédiaire de vis 32 (figure 17) traversant chaque branche 31A et 31B et se vissant dans des trous filetés correspondants 33, réalisés sur la face externe desdits rebords 28 de chaque plaque 26.

Chaque branche 31A, 31B de l'équerre 31 comporte un trou fileté 34 dans lequel se visse une vis 32 comportant une partie lisse 32a entre la tête 32b et la partie filetée 32c, afin que la vis puisse être manoeuvrée librement sur une hauteur égale à la partie lisse 32a, et également la rendre imperdable.

Chaque trou fileté 34 se situe au centre d'une partie emboutie 35 apte à procurer un serrage élastique de la vis 32.

Pour faciliter l'alignement du trou 33 par rapport à la vis 32 lors de la présentation des plaques 26, l'équerre 31 reçoit une petite équerre de butée 36 disposée perpendiculairement par rapport au plan horizontal de ladite équerre 31 dans l'angle interne formé par ses branches 31A, 31B.

Les moyens d'appui inférieurs de deux plaques adjacentes, ainsi reliées entre elles, sont constitués par une cornière 37 issue et solidaire de l'angle interne α de l'équerre 31 et disposée sur sa bissectrice XX' pour venir prendre appui et se coincer dans un logement 38 ménagé dans chaque angle externe du récipient 1, à sa base.

Les moyens d'appui central des plaques 26 sont constitués par une partie renforcée 39 (fig. 12) de ladite plaque, dans laquelle est ménagé un trou fileté 40 apte à recevoir par vissage une tige filetée 41 dont la tête 42 vient en butée sur la paroi correspondante du récipient 1.

De cette manière, après montage des plaques 26 sur ledit récipient 1, un vide d'air 43 est constitué pour former un isolant et ainsi diminuer les besoins en eau de la terre contenue dans le bac.

Enfin, les moyens de fixation et d'appui inférieurs des plaques ci-dessus décrits sont dissimulés par une jupe basse 44 (fig. 13 et 19) relié au rebord inférieur 28 de chaque plaque 26 par au moins deux vis horizontales 45, non bloquées, traversant des lumières oblongues verticales 46 réalisées dans ladite jupe 44 pour lui permettre un débattement libre vertical selon F1, F2, de manière à s'adapter aux dénivellations du sol et à cacher les éventuelles cales nécessaires à la mise de niveau des bacs lors de leur installation.

## Revendications

1. Bac jardinière pour usage urbain du type constitué par un récipient monobloc (1) comportant un élément intermédiaire perméable, de retenue de la terre végétale (4), déterminant un compartiment supérieur (5) pour recevoir celle-ci et un compartiment inférieur (6) destiné à être rempli d'eau (7) pour constituer une réserve, caractérisé en ce qu'il comporte à sa partie inférieure externe deux rainures (8) longitudinales et parallèles débouchant sur deux faces opposées (9, 10) dudit bac pour constituer des moyens de préhension inférieurs par palettisation et délimitant des pieds d'appui creux (11) correspondant sensiblement au compartiment inférieur (6) à réserve d'eau (7) d'une part et constituant des renforts aptes à rigidifier la structure du bac d'autre part.

2. Bac selon la revendication 1 caractérisé en ce que les pieds creux à réserve d'eau soit en communication avec l'extérieur par des orifices dont au moins deux d'entre eux (12-13A, 13B) constituent des trop-pleins situés, par rapport au sol, à des hauteurs différentes (H1, H2), et obturables en fonction du niveau d'eau (7) souhaité selon la saison, le trop-plein (13A, 13B) situé au niveau le plus haut n'étant jamais obturé.

3. Bac selon la revendication 2 caractérisé en ce que des orifices (16) sont situés à la partie la plus basse de chaque pied creux (11) à réserve d'eau (7) pour constituer, par l'intermédiaire de bouchons amovibles respectifs (17), des organes de vidange complète du bac.

4. Bac selon la revendication 2 caractérisé en ce que l'orifice constituant le trop-plein (12) est réalisé selon un axe sensiblement horizontal sur une paroi verticale latérale (9) du bac, au moins au-dessus d'un niveau correspondant à celui des sommets (8a) internes des rainures (8), de manière à assurer un niveau d'eau (7) identique dans chaque pied creux (11), par l'intermédiaire d'un seul trop-plein (12) choisi en fonction du niveau d'eau (7) souhaité et obturable de l'extérieur par un bouchon (18).

5. Bac selon la revendication 2 caractérisé en ce que le trop-plein supérieur non obturable (13A, 13B) est constitué par un conduit vertical tubulaire (14) d'une hauteur (H2) prédéterminée, débouchant d'une part à l'extérieur en traversant au moins un des sommets (8a) d'une rainure (8) et d'autre part à l'intérieur dans un volume d'air (15) ménagé entre terre (4) et eau (7) dans le bac.

6. Bac selon la revendication 5 caractérisé en ce que le volume d'air (15), dans lequel débouche le conduit (14) constituant le trop-plein supérieur (13A, 13B), est créé par un tunnel perforé (3A) interposé entre la terre (4) et l'élément de retenue (2) de celle-ci, lequel élément (2) est en appui horizontal sur le sommet (8a) des rainures (8) à l'intérieur du bac.

7. Bac selon la revendication 5 caractérisé en ce que le volume d'air (15) dans lequel débouche le conduit (14) constituant le trop-plein supérieur (13A, 13B) est créé par un tunnel perforé (3), interposé entre la terre (4) et le fond (1A) du bac sur lequel il prend appui, pour constituer lui-même l'élément intermédiaire de retenue de la terre (4).

8. Bac selon l'une des revendications 5, 6 ou 7 caractérisé en ce que deux conduits (14) constituent des trop-pleins supérieurs (13A, 13B) et sont disposés symétriquement sur le sommet (8a) de chaque rainure (8) et débouchent à l'intérieur du bac dans des volumes d'air (15) créés par deux tunnels perforés (3).

9. Bac selon la revendication 7 caractérisé en ce que les deux tunnels perforés (3) en appui sur le fond (1A) du bac sont d'une hauteur (H2) au moins supérieure à celle du plan horizontal de l'extrémité interne des conduits (14) constituant les trop-pleins supérieurs (13A, 13B) et sont juxtaposés pour enjamber respectivement chaque rainure (8) et définir entre eux-mêmes et entre eux et les parois latérales (20, 21) internes respectives du bac, des zones de terre (X, Y, Z) situées sous le niveau de l'eau (7), de manière telle que celle-ci (7), remonte dans la masse de terre (4) par capillarité, pour l'irriguer.

10. Bac selon l'une des revendications précédentes caractérisé en ce que ses parois latérales (9, 10, 20, 21) ainsi que les côtés longitudinaux (8b) des rainures (8) sont réalisés suivant des plans obliques, de manière à constituer des dépouilles aptes à permettre le gerbage de plusieurs bacs vides, de section quadrangulaire, par empilage vertical.

11. Bac selon l'une des revendications précédentes caractérisé en ce qu'il comporte à sa partie supérieure un rebord périphérique externe (22) sous lequel est fixée par serrage une cornière quadrangulaire (23) de contour correspondant et de section en L apte à renforcer sa solidité.

12. Bac selon la revendication 11 caractérisé en ce que la cornière (23) comporte quatre anneaux fixes (24) rapportés par soudure à l'extérieur de ses angles, selon une bissectrice (YY') de ceux-ci, pour permettre le passage d'élingues de levage d'une grue.

13. Bac selon l'une des revendications 1 à 10 caractérisé en ce que ses parois latérales (9, 10, 20, 21) reçoivent un habillage constitué de plaques de parement et d'isolation (26) disposées à distance desdites parois, par l'intermédiaire de moyens de fixation supérieure (29, 30) et inférieure (31, 32, 33) et d'appui central (39, 40, 41, 42) et inférieur (37, 38) de manière à ménager entre lesdites parois du bac et les plaques (26), un vide d'air (43) formant isolant et diminuant les besoins en eau (7) de la terre (4) contenue dans le bac (1).

14. Bac selon la revendication 13 caractérisé en ce que chacune des plaques (26) comporte sur ses champs supérieur et inférieur des rebords perpendiculaires (27, 28), parallèles entre eux et dirigés vers le récipient (1).

15. Bac selon la revendication 13 ou 14 caractérisé en ce que les moyens de fixation supérieurs des plaques (26) sur le bac sont constitués par deux ergots (29) équidistants, disposés perpendiculairement sur la face interne du rebord supérieur (27) de la plaque (26) conisidérée et aptes à se loger dans deux logements correspondants (30) du rebord périphérique externe (22) du récipient (1), au cours d'un mouvement d'accrochage de haut en bas.

16. Bac selon la revendication 13 ou 14 caractérisé en ce que les moyens d'appui central des plaques (26) sont constitués par une partie renforcée (39) de ladite plaque (26) dans laquelle est ménagé un trou fileté (40) apte à recevoir une tige filetée (41) dont la tête (42) vient en butée sur la paroi correspondante du récipient 1.

17. Bac selon la revendication 13 ou 14 caractérisé en ce que les moyens de fixation inférieurs des plaques (26) sont constitués par une pièce rapportée (31) formant une équerre et reliant deux à deux les plaques (26) par leur rebord inférieur (28) respectif, par l'intermédiaire de vis (32) traversant chaque branche (31A, 31B) de l'équerre (31) et se vissant dans des trous filetés correspondants (33), réalisés sur la face externe desdits rebords inférieurs (28) de chaque plaque (26).

18. Bac selon la revendication 13 ou 17 caractérisé en ce que les moyens d'appui inférieurs des deux plaques adjacentes (26) sont constitués par une cornière métallique (37) issue et solidaire de

l'angle interne ($\alpha$) de l'équerre (31) et disposés sur sa bissectrice XX' pour prendre appui et se coincer dans un logement (38) ménagé dans l'angle du récipient, à sa base.

19. Bac selon la revendication 13, 17 ou 18 caractérisé en ce que les moyens de fixation et d'appui inférieurs des plaques sont dissimulés par une jupe basse (44) reliée au bord inférieur (28) de chaque plaque (26) par au moins deux vis horizontales (45), non bloquées, traversant des lumières oblongues verticales (46) réalisées dans ladite jupe (44) pour lui permettre un débattement libre vertical (F1, F2) de manière à s'adapter aux dénivellations du sol.

**Fig. 1**

**Fig. 2**

**Fig. 3**

**Fig. 4**

**Fig. 5**

**Fig. 6**

**Fig. 7**

**Fig. 8**

**Fig. 16**

**Fig. 15**

**Fig. 19**

Fig. 12

Fig. 10

Fig. 11

Fig. 9

Fig. 13

Fig. 14

## Fig. 18

## Fig. 17

Office européen
des brevets

**RAPPORT DE RECHERCHE EUROPEENNE**

Numero de la demande

EP    92 40 0044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 400 421 (ETERNIT AG.)<br>* colonne 2, ligne 44 - colonne 3, ligne 23; figures * | 1,2,5,8 | A01G27/00 |
| A | DE-U-8 114 309 (RHEIN-CONTI KUNSTSTOFF-TECHNIK GMBH.)<br>* page 8, ligne 3 - page 9, ligne 27; figure 1 * | 1-3 | |
| A | US-A-4 837 972 (E. W. REED)<br>* colonne 2, ligne 4 - ligne 8; figure 5 * | 10 | |
| A | EP-A-0 249 027 (L. CABRE ROIGE)<br>* figure 13 * | 12,13 | |
| A | DE-U-8 310 661 (TWL INTERNATIONAL HYDROKULTUR GMBH.)<br>* figure * | 13 | |

**DOMAINES TECHNIQUES RECHERCHES (Int. Cl.5 )**

A01G

Le présent rapport a été établi pour toutes les revendications

| Lieu de la recherche | Date d'achèvement de la recherche | Examinateur |
|---|---|---|
| BERLIN | 24 MARS 1992 | MARTIN DEL RIO A. |